(19) Europäisches Patentamt
European Patent Office
Office européen des brevets

(11) Veröffentlichungsnummer: **0 103 737**
**B1**

(12) # EUROPÄISCHE PATENTSCHRIFT

(45) Veröffentlichungstag der Patentschrift: **15.01.86**

(21) Anmeldenummer: **83107936.3**

(22) Anmeldetag: **11.08.83**

(51) Int. Cl.⁴: **C 23 F 11/10**, C 10 M 125/22, E 21 B 41/02, C 23 F 11/14

(54) **Inhibitoren gegen die Korrosion von CO2 und H2S in Wasser-in-Öl-Emulsionen.**

(30) Priorität: **04.09.82 DE 3232921**

(43) Veröffentlichungstag der Anmeldung: **28.03.84 Patentblatt 84/13**

(45) Bekanntmachung des Hinweises auf die Patenterteilung: **15.01.86 Patentblatt 86/3**

(84) Benannte Vertragsstaaten: **DE FR GB NL**

(56) Entgegenhaltungen:
**EP-A-0 060 455**
**DE-B-1 172 925**
**GB-A-896 375**
**GB-A-2 010 237**
**US-A-2 944 969**

(73) Patentinhaber: **BASF Aktiengesellschaft, Carl-Bosch- Strasse 38, D-6700 Ludwigshafen (DE)**

(72) Erfinder: **Oppenleander, Knut, Dr., Otto- Dill-Strasse 23, D-6700 Ludwigshafen (DE)**
Erfinder: **Stork, Karl, Dr., Reutersgarten 1, D-6840 Lampertheim (DE)**
Erfinder: **Barthold, Klaus, Dr., Paulusbergstrasse 4, D-6800 Mannheim 51 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 103 737 B1

LIBER, STOCKHOLM 1986

**Beschreibung**

Die Erfindung betrifft neue Inhibitoren auf der Basis von Imidazolinoder Tetrahydropyrimidinderivaten, die gegen die Korrosion durch $CO_2$ und $H_2S$ ("Sauergas) beim Transport und Lagern von Rohölen, die i. a. als Wasser-, insbesondere Salzwasser in-öl-Emulsionen vorliegen, wirken.

Es ist bekannt und geübte Praxis, bei der Ölförderung, dem Transport und der Lagerung des Öls durch Injizieren eine Lösung oder Dispersion von Korrosionsinhibitoren in das Öl einzubringen, so daß sich auf der Oberfläche der mit dem Öl in Berührung kommenden Metallteile eine Schutzschicht ausbildet.

Die DE-OS 28 46 977 lehrt für diese Zwecke Korrosionsinhibitoren, die aus einem Imidazolinsalz, einem öllöslichen Lösungsmittel für das Imidazolinsalz und einem Kohlenwasserstofföl bestehen.

Es hat sich jedoch gezeigt, daß gerade bei salzwasserhaltigen Wasser-in-Öl-Emulsionen (im folgenden kurz "W/O-Emulsionen" genannt) Imidazolinsalze, wie sie in der genannten Literaturstelle beschrieben sind, die Korrosion von $H_2S$ und $CO_2$ noch nicht genügend unterdrücken. Außerdem ist die Anwendung der Imidazoline hier insofern kompliziert, als sie zusammen mit spezifischen Lösungsmitteln und dem Kohlenwasserstofföl eingesetzt werden müssen, d. h., der Aufwand für ihren Einsatz ist zu groß.

Gegenstand der Europäischen Patentanmeldung Nr 60 455 ist ein Inhibitor gegen die Korrosion von $CO_2$ under $H_2S$ in Wasser-in-Öl-Emulsionen, auf der Basis eines Rekationsprodukts von Imidazolin- oder Tetrahydropyrimidinderivaten, bzw. deren ringoffenen Vorprodukten mit elementaren Schwefel. Diese Inhibitoren sind schon sehr gut wirksam, jedoch ist ihre Herstellung infolge der zwingend notwendigen Einarbeitung von Schwefel energiaufwendig und ihre Wirkung als Inhibitor noch nicht in allen Fällen optimal.

Das Ziel der Erfindung bestand darin, fußend auf den Inhibitoren des vorgenannten Typs, Verbesserungen zu schaffen, um einen noch besseren Korrosionsschutz gegen $H_2S$ under $CO_2$ in Wasser-in-Öl-Emulsionen, vornehmlich in Salzwasser-in-Öl-Emulsionen, zu erreichen.

Dieses Ziel wurde überraschenderweise Mischungen, enthaltend

A) Verbindungen der Formel I

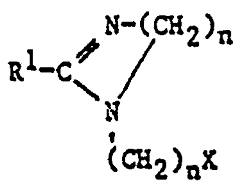

I

oder deren ringoffene Vorprodukte der Formel I a

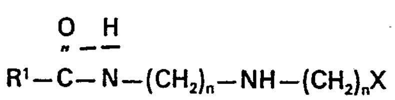

Ia,

in denen

$R^1$ = $C_8$- bis $C_{22}$-Alkyl oder Alkenyl

X = -OH, -$NH_2$ oder 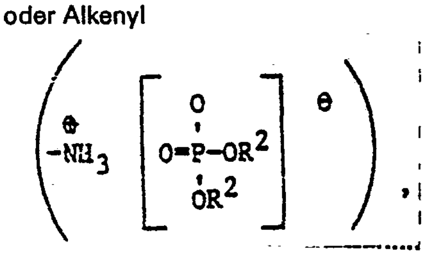,

$R_2$ = $C_4$- bis $C_{18}$-Alkyl und

n = 2 oder 3 bedeuten,

und

B) Maleinamidsäuren der Formel II

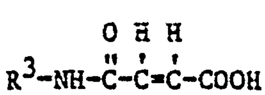

II

in der $R^3$ = $C_8$- bis $C_{22}$-Alkyl oder Alkenyl bedeutet, erreicht, wobei die Komponenten A und B im Molverhältnis A:B = 1:4 bis 4:1 stehen.

Die Verbindungen der Komponente A des erfindungsgemäß Produkts sind Imidazolinee (n = 2) oder Tetrahydropyrimidine (n = 3) der Formel I oder deren ringoffene Vorprodukte der Formel I a.

Hierbei bedeutet R[1] einen langkettigen, gegebenenfalls verzweigten Alkyloder Alkenylrest mit 6 bis 22, vorzugsweise 8 bis 17 C-Atomen. X steht für eine Hydroxyl- oder Aminogruppe, wobei die Aminogruppe auch in protonierter Form vorliegen kann. Als Anion kommt ein Dialkylorthophosphat in Betracht. Die dem Orthophosphorsäuredialkylester zugrundeliegenden Alkohole enthalten 4 bis 18, vorzugsweise 7 bis 17 C-Atome.

Die Herstellung der Heterocyclen und deren ringoffener Vorprodukte gehört zum Stand der Technik und bedarf keiner detaillierten Erläuterung. Man setzt üblicherweise Carbonsäuren der Formel $R^1COOH$ mit Diethylentriamin, Dipropylentriamin, Aminoethylethanolamin oder Aminopropylpropanolamin bei ca. 130 bis 170°C um und erhält zunächst ein Säureamid der Formel Ia, das schon als Inhibitor-Komponente verwendet werden kann. R[1] hat hierbei die o. g. Bedeutung.

Säuren der Formel $R^1COOH$ sind z. B. 2-Ethylhexansäure, Nonansäure, Ölsäure, Stearinsäure, Laurinsäure, Elaidinsäure sowie Gemische natürlicher Fettsäuren, wie Cocos- oder Talgfettsäure.

Anschließend führt man bei ca. 190 bis 250°C die Ringschlußreaktion durch und erhält so ein Imidazolin oder Tetrahydropyrimidin, das dann gegebenenfalls durch weitere Umsetzung mit Orthophosphorsäuredialkylestern in das Ammoniumsalz überführt werden kann, wenn in der ersten Stufe die Säure mit Diethylentriamin oder Dipropylentriamin umgesetzt worden ist.

Als Orthophosphorsäuredialkylester kommen vor allem solche Diester in Betracht, die sich von Amylalkohol, n-Hexanol, n-Heptanol, n-Octanol, 2-Ethylhexanol, Nonanolen, Decanolen und Isotridecanol, Stearylalkohol, Oleylalkohol sowie den aus der Oxosynthese stammenden $C_9/C_{11}$- und $C_{13}/C_{15}$-Schnitten herleiten. Auch die aus der Ziegler-Synthese stammenden $C_8/C_{10}$-, $C_{10}/C_{12}$- und $C_{14}/C_{16}$-Alkoholgemische seien an dieser Stelle genannt.

Besonders wertvolle Inhibitor-Komponenten sind solche Verbindungen, die sich von den $C_{12}$- bis $C_{20}$-Carbonsäuren ableiten, z. B. Verbindungen der Formeln

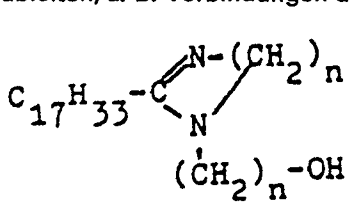

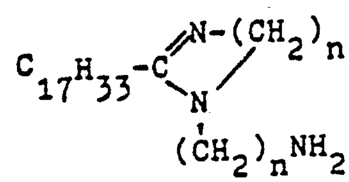

und

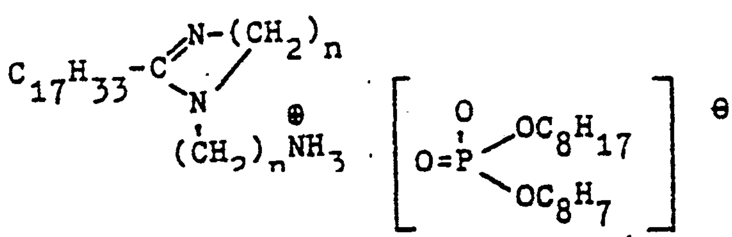

,

sowie die entsprechenden gesättigten $C_{17}H_{35}$-Derivate.

In einder besonderen Ausführungsform können die Imidazolin- und Tetrahydropyrimidinderivate oder deren ringoffene Vorprodukte anschließend mit Schwefel, der zweckmäßigerweise in kolloidaler Form, (d. h. als Schwefelblume) vorliegen soll, abgemischt und nach der Abmischung unter Erhitzen auf 100 bis 200°C ca. 1 bis 3 Stunden zur Reaktion gebracht werden. Der Schwefel ist dabei klar löslich.

Das Gewichtsverhältnis Imidazolin bzw. Teatrahydropyrimidin bzw. ringoffenes Vorprodukt zu Schwefel kann 100:1 bis 2:1, vorzugsweise 100:1 bis 4:1 betragen.

Als Komponente B dienen die für sich allein als Korrosionsinhibitoren bekannten, definitionsgemäßen Maleinamidsäuren der Formel II

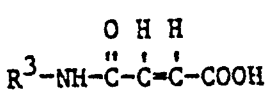

II.

$R_3$ bedeutet darin einen $C_8$- bis $C_{22}$-, vorzugsweise einen $C_{10}$- bis $C_{16}$-Alkyl- oder -Alkenylrest, beispielsweise den Decyl-, Undecyl-, Dodecyl-, Tridecyl-, Hexadecyl- oder einen entsprechenden einfach ungesättigten Rest. Besonders bevorzugt sind Decyl-, Dodecyl-, Pentadecyl- und Tridecylreste mit unverzweigten oder verzweigten Kohlenstoffketten.

Die Komponenten A und B werden im Molverhältnis A:B wie 1:4 bis 4:1, vorzugsweise 1:2 bis 2:1, zweckmäßigerweise unter Erhitzen auf ca. 60 bis 80°C abgemischt.

Zur besseren Dosierung können sie gegebenenfalls mit einem Lösungsmittel, wie Xylol oder Toluol gebrauchsfertig verdünnt werden.

Weiterhin ist es möglich, die erfindungsgemäßen Inhibitoren mit anderen Stoffen, z. B. zusätzliche Inhibitoren oder Hilfsmittel zu mischen.

Die so erhaltenen Kompositionen, die in freier Form den W/O-Emulsionen zugegeben werden können, bieten nunmehr einen gegenüber den Produkten gemäß der EP-Anmeldung Nr. 60 455 noch gesteigerten Schutz gegen $H_2S$- und $CO_2$-Korrosion. Man setzt sie je nach Provenienz bzw. Zusammensetzung der Rohölemulsion — bezogen auf die Emulsion — in Mengen von 10 bis 1000 ppm zu, d. h. in Mengen, die deutlich den Synergismus der beiden Mischungskomponenten aufzeigen, da diese jetzt für sich in wesentlich geringeren Mengen eingesetzt werden.

Die nun folgenden Beispiele erläutern die Erfindung.

**Beispiele**

Zur Prüfung der Inhibitorkompositionen wurde ein dynamischer Test (sog. "Wheel-Test") durchgeführt, eine Methode, womit Korrosionsinhibitoren für die Erdöl- und Erdgasförderung getestet werden.

Als Testcoupons wurden Stahlbleche der Abmessungen 130 mm × 10 mm × 1 mm gewählt. Diese Blechstreifen wurden geschmirgelt, mit Toluol entfettet und gewogen. Als Testmedium diente Testbenzin, das Salzwasser mit 3 Gew.% NaCl — bezogen auf Wasser — emulgiert enthielt. Die Emulsion enthielt 50 Gew.% Salzwasser und war mit $H_2S + CO_2$ gesättigt.

Dann wurden 250 ppm — bezogen auf das Gewicht der Emulsion — an Inhibitor zugesetzt.

Die entfetteten und gewogenen Bleche wurden anschließend in die Emulsionen eingebracht und bei 80°C 16 Stunden einer mechanischen Bewegung (40 Upm mittels einer die Testgefäße drehenden Welle) unterzogen.

Die Testblechstreifen wurden anschließend mit einer inhibierten Säure gereinigt, entfettet und nach Trocknung zur Bestimmung des Gewichtsverlustes gewogen. Die Ausertung erfolgte im Verlgeich zum Blindwert (Versuch ohne Inhibitorzusatz).

Aus den Ergebnissen der Wägungen wurde die Geschwindigkeit der Korrosion und daraus der prozentuale Korrosionsschutz Z errechnet:

$$Z = \frac{G_o - G_1}{G_o} \cdot 100 \ [\%],$$

wobei $G_0$ die Geschwindigkeit der Korrosion ohne Inhibitor und $G_1$ die Geschwindigkeit mit Inhibitor bedeuten.

Die Ergebnisse sind aus den folgenden Tabellen ersichtlich:

Die mit * gekennzeichneten Proben stellen erfindungssgemäße 1:1-Abmischungen mit Maleinisotridecylamidsäure dar.

**Tabelle 1**

Verbindung:

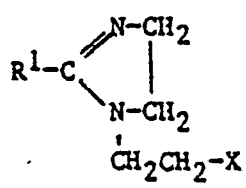

Dosierung 250 ppm

| Probe | $R^1$ | X | Schwefelgehalt [Gew.%] | Korrosionsschutz Z [%] |
|---|---|---|---|---|
| Blindprobe | — | — | — | 0 |
| 1 | $C_{17}H_{33}$ | OH | 0 | 26,0 |
| 2 | $i-CH_{17}$ | $NH_2$ | 1/5/10 | 66,1/69,4/70,7 |
| 3 | $C_{17}H_{33}$ | $NH_2$ | 5/20 | 72,7/75,1 |
| 4 | $C_{17}H_{33}$ | OH | 15/20/30 | 76,7/80,2/82,4 |
| 1* | $C_{17}H_{33}$ | OH | 0 | 89,2 |
| 2* | $i-C_8H_{17}$ | $NH_2$ | 1/5/10 | 87,4/38,2/89,0 |
| 3* | $C_{17}H_{33}$ | $NH_2$ | 5/20 | 89,3/90,1 |
| 4* | $C_{17}H_{33}$ | OH | 15/20/30 | 88,9/91,2/92,0 |

**Tabelle 2**

Verbindung:

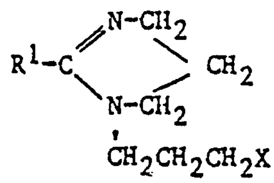

Dosierung 250 ppm

| Probe | $R^1$ | X | Schwefelgehalt [Gew.%] | Korrosionsschutz Z [%] |
|---|---|---|---|---|
| Blindprobe | — | — | — | 0 |
| 1 | $C_{17}H_{33}$ | OH | 0 | 19,5 |
| 2 | $C_{17}H_{33}$ | OH | 5/10/15 | 58,5/63,5/67,6 |
| 1* | $C_{17}H_{33}$ | OH | 0 | 84,5 |
| 2* | $C_{17}/H_{33}$ | OH | 5/10/15 | 85,0/87,0/90,1 |

**Tabelle 3**

Verbindung: $R^1-\overset{O}{\overset{\|}{C}}-NH(CH_2)_n-NH-(CH_2)_n-X$

Dosierung 250 ppm

| Probe | $R^1$ | X | n | Schwefelgehalt [Gew.%] | Korrosionsschutz Z [%] |
|---|---|---|---|---|---|
| Blindprobe | — | — | — | — | 0 |
| 1 | Talgfettalkyl | OH | 2 | 0 | 42,0 |
| 2 | " | $NH_2$ | 2 | 0 | 68,3 |
| 3 | " | OH | 2 | 5/10/30 | 56/77/79,5 |
| 4 | " | $NH_2$ | 2 | 1/5/10 | 72,5/75,5/75,8 |
| 5 | $C_{17}H_{33}$ | $NH_2$ | 2 | 1/5/10 | 74,5/76,5/77,8 |
| 6 | $C_{17}H_{33}$ | $NH_2$ | 2 | 0 | 16,6 |
| 7 | Talgfettalkyl | OH | 3 | 0 | 53,8 |
| 8 | " | $NH_2$ | 3 | 0 | 59,3 |
| 9 | " | OH | 3 | 1/5 | 69,1/74,5 |
| 10 | " | $NH_2$ | 3 | 1/5 | 75,0/81,6 |

Verbindung:

$R^1-\overset{O}{\overset{\|}{C}}-NH(CH_2)_n-NH-(CH_2)_n-X$

Dosierung 250 ppm

| Probe | $R^1$ | X | n | Schwefelgehalt [Gew.%] | Korrosionsschutz Z [%] |
|---|---|---|---|---|---|
| 1* | | | | | 84,3 |
| 2* | | | | | 89,7 |
| 3* | | | | | 88,0/89,5/90,0 |
| 4* | | | | | 86,7/92,0/92,8 |
| 5* | (R, X, n und Schwefelgehalt | | | | 87,5/89,6/91,4 |
| 6* | entsprechend 1 bis 10) | | | | 85,8 |
| 7* | | | | | 82,3 |
| 8* | | | | | 92,8 |
| 9* | | | | | 82,3/88,0 |
| 10* | | | | | 84,2/86,2 |

Tabelle 4

Verbindung: Maleinisotridecylamidsäure Dosierung 250 ppm

| Korrosion durch | Korrosionsschutz Z [%] |
|---|---|
| $H_2S$ | 40 |
| $CO_2$ | 67 |
| $H_2S + CO_2$ | 60 |

Die erfindungsgemäßen Inhibitoren ergeben somit gegenüber den Vergleichsprodukten eine eindeutig bessere Korrosionsschutzwirkung.

**Patentansprüche**

1. Inhibitor gegen die Korrosion von $CO_2$ und $H_2S$ in Wasser-in-Öl-Emulsionen, enthaltend
A) Verbindungen der Formel I

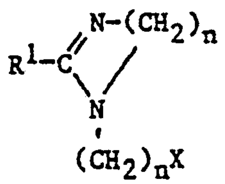

I

oder deren ringoffene Vorprodukte der Formel I a

$$R^1-\overset{O}{\overset{\|}{C}}-\overset{H}{N}(CH_2)_n-NH-(CH_2)_nX \quad Ia,$$

in denen

$R^1$ = $C_6$- bis $C_{22}$- Alkyl oder Alkenyl,

X = -OH, -$NH_2$ oder 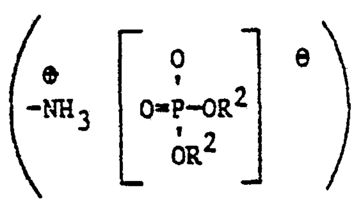 ,

$R^2$ = $C_4$- bis $C_{18}$-Alkyl und
n = 2 oder 3 bedeuten,
und

B) Maleinamidsäuren der Formel II

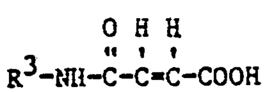

II

in der $R^3$ = $C_8$- bis $C_{22}$-Alkyl oder Alkenyl bedeutet, wobei die Komponenten A und B im Molverhältnis A:B = 1:4 bis 4:1 stehen.

2. Inhibitoren gemäß Anspruch 1, bei denen die Komponente A mit elementarem Schwefel im Gewichtsverhältnis 100:1 bis 2:1 bei 100 bis 200°C umgesetzt worden ist.

## Revendications

1. Inhibiteur de corrosion par $CO_2$ et $H_2S$ dans des émulsions eau-dans-huile, contenant:
A) des composés de formule I

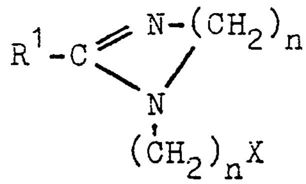

(I)

ou leurs progéniteurs à noyau ouvert de formule i a

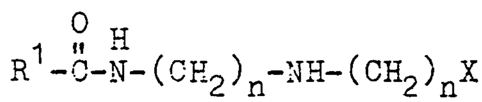

(Ia)

dans lesquelles:
$R^1$ = Alkyle ou alcényle en $C_6$ à $C_{22}$

$X = -OH, -NH_2$ ou 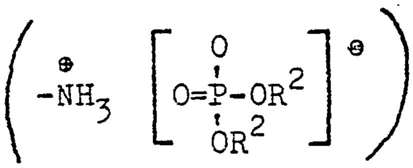

$R^2$ = Alkyle en $C_4$ à $C_{18}$ et
n = 2 ou 3
et
B) des acides maléinamiques de formule II

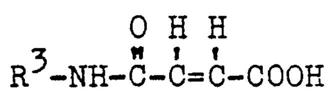

(II)

dans laquelle $R^3$ représente un alkyle ou alcényle en $C_8$ à $C_{22}$, les composants A et B étant dans un rapport molaire A : B de 1 : 4 à 4 : 1.

2. Inhibiteurs selon la revendication 1, dans lesquels le composant A a été mis en réaction avec du soufre élémentaire dans un rapport pondéral de 100 : 1 à 2 : 1, à 100—200°C.

## Claims

1. An inhibitor against corrosion caused by $CO_2$ and $H_2S$ in water-in-oil emulsions, containing

(A) a compound of the formula I

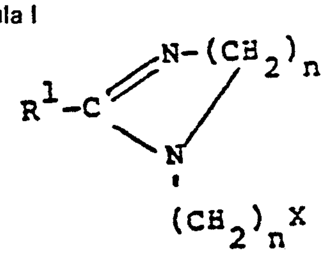

I

or its open-ring precursors of the formula I a

$$R_1-\overset{O}{\overset{\|}{C}}-\overset{H}{N}-(CH_2)_n-NH-(CH_2)_nX \qquad \text{I a,}$$

in which formulae

$R^1 = C_6$-$C_{22}$ alkyl or alkenyl,

X = OH, -$NH_2$ or 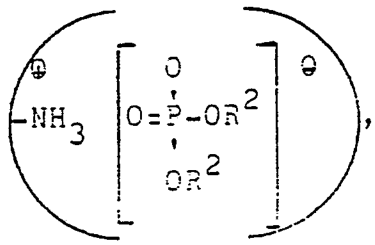,

$R^2 = C_4$-$C_{18}$ alkyl, and
n = 2 or 3; and

(B) a maleamidic acid of the formula II

$$R^3-NH-\overset{O}{\overset{\|}{C}}-\overset{H}{\overset{|}{C}}=\overset{H}{\overset{|}{C}}-COOH \qquad \text{II,}$$

where $R^3$ is $C_8$-$C_{22}$ alkyl or alkenyl,

the molar ratio of component A to component B being from 1:4 to 4:1.

2. An inhibitor as claimed in claim 1 wherein component A has been reacted with elemental sulfur in a weight ratio of 100:1 to 2:1 at 100 to 200°C.